# EUROPÄISCHE PATENTSCHRIFT

(11) **EP 1 085 243 B1**
(45) Veröffentlichungstag und Bekanntmachung des Hinweises auf die Patenterteilung: **30.06.2004**
(21) Anmeldenummer: 99118286.6
(22) Anmeldetag: 15.09.1999
(51) Int. Cl.: F16J 12/00

(54) **Behälter zur Aufnahme eines unter Druck stehenden Mediums**
Container for pressurized medium
Réservoir pour fluides sous pression

(43) Veröffentlichungstag der Anmeldung: 21.03.2001
(73) Patentinhaber: Linnemann-Schnetzer GmbH, 59229 Ahlen (DE)
(72) Erfinder: Schürmann, Helmut, Prof. Dr.-Ing., 67133 Maxdorf (DE); Wenzel, Stefan, 64287 Darmstadt (DE)
(74) Vertreter: Strauss, Hans-Jochen, Dipl.-Phys., Dr.

(56) Entgegenhaltungen:
- WO-A-93/14356
- DE-A- 3 922 577
- DE-A- 19 832 145
- DE-U- 1 939 919
- US-A- 3 366 263
- US-A- 3 443 631

## Beschreibung

Die Erfindung betrifft einen Behälter zur Aufnahme eines unter Druck stehenden Mediums, der im wesentlichen aus einem Faser-Kunststoff-Verbund-Material hergestellt ist, wobei dessen Form aus einem rohrförmigen Mittelteil besteht, an dessen Enden zur Schließung des Behälters jeweils ein Boden angeformt ist. Ein Behälter gemäß dem Oberbegriff des Anspruchs 1 ist z. B. aus der DE-A-3 922 577 bekannt.

Bei der Konstruktion, bzw. bei der Herstellung von innendruckbelasteten Behältern, gilt die Anbindung der Behälterböden an ein Mittelteil, welches vornehmlich aus einem Kreiszylinderrohr besteht, als zentrales Problem. Bei der Gestaltung der Böden empfehlen sich halbkugelförmige Böden, die nach außen gewölbt ausgeführt sind.

Die Erfindung geht aus von einem Behälter zur Aufnahme eines unter Druck stehenden Mediums, der aus einem Faser-Kunststoff-Verbund hergestellt ist, denn Faser-Kunststoff-Verbundwerkstoffe bieten gegenüber den metallischen Werkstoffen insbesondere den Vorteil großer Gewichtsersparnis. Bei der Betrachtung des Membran-Spannungszustandes kann bei Verwendung dieses Materials die hohe Faserfestigkeit optimal genutzt werden, da die Leichtbaugüte durch das Verhältnis Zugfestigkeit/Dichte gekennzeichnet ist, und diese bei Faser-Kunststoff-Verbunden im Vergleich zu metallischen Werkstoffen sehr hoch ist.

Unter Verwendung einer Dichtschicht, die im Behälterinneren eingebaut ist und als Liner bekannt ist, kann ein großflächiges Behälterversagen unterbunden werden. Der Grund hierfür liegt darin, daß schon weit bevor die Faserfestigkeit erreicht wird, sogenannte Zwischenfaserbrüche auftreten können. Diese verlaufen parallel zu den Fasern in der Matrix und werden vorwiegend durch Spannungen quer zur Faserrichtung. also durch Querzug erzeugt. Die Folge eines derartigen Behälterversagens wäre dann, daß die Flüssigkeit tröpfchenförmig austritt und man von "Weeping" spricht. Hierbei ist der Bodenbereich im Übergangsbereich von Zylinder zum Boden gefährdet, wo insbesondere Zusatzmomente aus dem unterschiedlichen Verformungsverhalten der beiden Schalen resultieren. Hier tritt Weeping erfahrungsgemäß am häufigsten auf.

Der Liner hat die Innenabmaße des Behälters und dient gleichzeitig auch als Wickelkern, auf dem die Verstärkungsfasern unter definierten Winkeln abgelegt werden. Durch die Verwendung eines Liners umgeht man auch vorteilhaft das Problem, den Wickelkern nach der Behälterherstellung wieder aus dem Inneren entfernen zu müssen. Als Linerwerkstoff werden Metalle oder Kunststoffe eingesetzt.

Jedoch birgt der Liner neben seinen Vorteilen auch gravierende Nachteile, die aus der Verwendung eines Liners erwachsen und darin bestehen, daß, wenn der Liner nicht dauerhaft fest mit der tragenden Laminatschicht verbunden ist, kann es während des Betriebs - z.B. infolge der unterschiedlichen Wärmeausdehnungen von Laminat und unverstärktem Liner - einerseits zu großen Wärmespannungen und andererseits zur Verformungsbehinderung des Liners mit Stabilitätsversagen kommen. Außerdem kann es geschehen, daß durch Diffusion das eingelagerte Medium zwischen Liner und Tragschicht gelangt, wodurch der Liner auf Außendruck belastet und damit ebenfalls stabilitätsgefährdet ist. Um insbesondere eine Verbindung Laminat und Liner herzustellen, behilft man sich, indem man Gewebe in die Liner-Oberfläche einschmilzt, um so zumindest eine mechanische Verankerung mit der tragenden Laminatschicht zu erzielen.

Hieraus ergibt sich die der Erfindung zugrundeliegende Aufgabe, die darin gesehen wird, einen Behälter zur Aufnahme eines unter Druck stehenden Mediums, der aus einem Faser-Kunststoff-Verbund-Material hergestellt ist, derart weiterzubilden, daß er insbesondere an seinen kritischen Stellen und hier in den Endbereichen eine höhere Sicherheit gegenüber Weeping bietet, wobei andererseits eine kostengünstige Herstellung eines derartigen Druckbehälters gewährleistet werden soll.

Diese Aufgabe wird erfindungsgemäß dadurch gelöst, daß der als separates Teil ausgebildete Boden, der aus einem Faser-Kunststoff-Verbund-Material mit Kurz-, Lang- oder Endlosfasern besteht, nach innen in den Behälterraum gewölbt ausgebildet ist. Die Anordnung des Bodens in der erfindungsgemäßen Art bringt im wesentlichen den Vorteil. daß anstelle der gefährlichen Zugspannungen, die insbesondere bei der Außenwölbung auftreten, nun aufgrund der Umkehrung des Bodens im Flächenbereich Quer-Druckspannungen auftreten. Da die Quer-Druckfestigkeit von unidirektionalen Laminatschichten aber etwa dreimal so hoch ist, wie die Quer-Zugfestigkeit, läßt sich der Behälter mit nach innen gewölbten Böden etwa dreimal höher belasten, bevor Weeping auftritt. Dies ist somit ein anderer Ansatz, als der bei metallischen Behältern, bei dem der Wunsch nach Stellbarkeit zu nach innen gewölbten Böden geführt hat. Ein Faserverbund bei der Innenwölbung hebt die Rißbildungsgrenzen deutlich an und verhindert damit frühzeitiges Leckwerden. Bewußt wird dabei in Kauf genommen, daß die Fasern parallel zur Faserrichtung ungünstigerweise auf Druck belastet werden; jedoch überwiegen die Vorteile der Querdruckbelastung auf die Weeping-Grenzen. Ein weiterer Vorteil ergibt sich bei der nach innen gewölbten Bodenausbildung daraus, daß die Stellbarkeit des Behälters ermöglicht wird, wobei sich die Möglichkeit ergibt, stufenlose Behältervolumina herzustellen. Erfindungsgemäß ist es somit gelungen, einen höherbelastbaren Innendruckbehälter aus Faser-Kunststoff-Verbund-Material zu gestalten, die aufgrund der geschickten Nutzung der günstigeren Werkstoff-Festigkeiten auch besonders große Gewichtseinsparungen gegenüber allen bisherigen Konstruktionen ermöglichen. Auch bei der Herstellung eines derartigen erfindungsgemäßen Behälters ergeben sich Vorteile, die darin zu sehen sind. daß die Behälterherstellung nicht mehr einteilig erfolgt, sondern der zylindrische Behälterbereich beispielsweise als einteiliges Rohr auf einem Stahl-Wickelkern gefertigt wird und anschließend, nach dem Abziehen vom Kern, kann das Mittelteil auf Länge geschnitten werden. Auf diese Weise lassen sich ohne zusätzlichen Werkzeugaufwand beliebig lange Behälter, d.h. beliebige Volumina, einstellen.

Zur Einbindung des Bodens wird erfindungsgemäß vorgeschlagen, daß an dem nach innen gewölbten Boden ein umlaufender Kragen angeordnet ist, der an der Innenwandung des Mittelteils anliegt und mit dieser verbunden ist. Hierbei kann der Boden eingeklebt, bei thermoplastischen Matrixsystemen auch eingeschweißt werden. Es besteht ferner die Möglichkeit, ihn mittels einer Bolzenverbindung, also z.B. durch Niete oder Schrauben mit dem Zylinderteil zu verbinden. Schließlich wird noch ein Formschluß vorgeschlagen, der dadurch entsteht, daß nach dem Einsetzen des Bodens in den Behälter-Zylinderbereich ein Stützring über die Enden des Zylinderbereiches gepreßt wird, wodurch der Boden gegen Herausdrücken durch Innendruck gesichert ist. Eine besonders vorteilhafte Weiterbildung besteht darin, den Boden an den Enden konisch zu gestalten. Gehalten wird der Boden dadurch, daß auch die zylindrischen Enden als Gegenpaarung entsprechend konisch verformt werden und ein konischer Stützring aufgepreßt wird. Die axialen Kräfte, die infolge des Innendrucks den Boden beaufschlagen, werden über den Konuswinkel in radiale Klemmkräfte umgelenkt. Diese Klemmkräfte erzeugen in dem Stützring tangentiale Umfangs-Zugspannungen. die von einem Faserverbund-Laminat besonders gut aufgenommen werden können.

Nach einer zweckmäßigen Weiterbildung, die Böden mit dem Mittelteil zu verbinden, wird vorgeschlagen, reibungserhöhende Zwischenschichten, eine Schraubverbindung oder auch Schnappverschlüsse zur Anbindung des Bodens im Bereich des Kragens vorzusehen. Wird ein thermoplastischer Werkstoff eingesetzt, so bietet es sich bei allen Verbindungsarten an, zusätzlich die Böden mit dem Mittelteil zu verschweißen. Neben der Verbesserung der Verbindung erzielt man dadurch eine zusätzliche Dichtfunktion.

In Weiterbildung kann eine Abdichtung zwischen den Böden und dem Mittelteil notwendig sein, wobei dann z.B. auf einen O-Ring zurückgegriffen werden kann. Der Boden weist dabei eine entsprechende Nut zur Aufnahme des O-Ringes auf. Als ergänzende Weiterbildung wird vorgeschlagen, den O-Ring aus dem gleichen Werkstoff zu fertigen, wie die Böden; so daß dadurch ein für die Entsorgung bestimmter Behälter keinem Sortentrennungsprozeß zugeführt werden muß.

In Weiterbildung der Verbindung wird weiterhin vorgeschlagen, die Böden zur Abdichtung mit Dichtlippen zu versehen, die das unter Druck stehende Medium abdichten. Dabei kann diese Lippendichtung bei der Herstellung der Böden direkt mit angeformt werden.

Gemäß der Erfindung wird weiter vorgeschlagen, daß das Faserverbundlaminat mit einem thermoplastischen Matrixsystem ausgestattet werden kann. Dies hätte den Vorteil des einfachen Werkstoffrecyclings. Das Bauteil kann zermahlen und das faserverstärkte Laminat - je nach Faserlänge - in mattenverstärktes Halbzeug oder in Kurzfaser-Spritzgußmaterial eingearbeitet und zu neuen Bauteilen verarbeitet werden. Daher wird vorgeschlagen, den Boden nicht nur als Faserverbundstruktur mit kurz- oder Endlosfasern herzustellen, sonderen ihn aus kurzfaserverstärktem Thermoplast-Kunststoff spritzzugießen oder zu pressen. Um zu einem besonders geringen Gewicht zu gelangen, sollte die Bodenstruktur nicht als Vollquerschnitt, sondern verrippt ausgeführt werden. In die Knoten der Rippen können die Anschlüsse für Zu- und Ableitungen erfindungsgemäß integriert werden. Die Anschlüsse können mittels Metallinserts, aber auch ausschließlich in Kunststoff, letzteren mit direkt beim Spritzguß angeformten Anschlußgeometrien - z.B. mit Anschlußgewinden - versehen werden. Außerdem ist es zur Erhöhung der Auszugsfestigkeit der Anschlüsse möglich, Faserverbundröhrchen mit Langfaserverstärkung durch Einlegen in das Spritzgußwerkzeug oder späteres Einschweißen an diesen hochbelasteten Stellen zu plazieren.

In Weiterbildung insbesondere der Bodenstruktur wird vorgeschlagen, daß eine weitere leichtgewichtige Möglichkeit besteht, den Boden als Sandwich auszuführen, wobei die Randschichten als Laminat, der Kern z.B. aus einem druckfesten Schaum ausgeführt sein kann.

In Weiterbildung der Erfindung wird zudem vorgeschlagen, den eigentlichen Boden, der als geschlossene zweidimensionale Struktur gegen den Behälterinhalt abdichtet und der bei einem ersten Konstruktionsvorschlag auf die Rippen gesetzt wird, nicht auf der Innenseite des Bodens (also dem Zylinderteil zugewandt) anzuordnen, sondern ihn etwa in der Mitte, oder sogar im nach außen gewandten Drittel der Rippenhöhe zu plazieren. Auf diese Weise läßt sich das Volumen des Behälters noch etwas vergrößern.

Weiter wird vorgeschlagen, eine Zwischenstufe zwischen einem ausschließlich aus kurzfaserverstärktem Thermoplast bestehenden Boden und einem ausschließlich aus Endlosfaser-Laminat hergestellten Boden zu schaffen. Dazu werden die Rippen in den Endbereichen - also im Zug- und Druckgurt - durch örtliche Langfaserstränge verstärkt. Diese Faserstränge sind vorab mit einem zum Thermoplast des Bodens kompatiblen Thermoplasten imprägniert worden und werden, z.B. vor dem Spritzgießen, im Werkzeug plaziert.

Ein Ausführungsbeispiel der Erfindung wird anhand der nachstehenden Figuren 1 - 11 näher erläutert, dabei zeigen:
- Figur 1:: Eine teilweise geschnittene Seitenansicht des Behälters mit eingebundenem, nach innen gewölbten Boden:
- Figur 2:: Eine weitere Ausführungsform gemäß der Figur 1 als Bolzenverbindung;
- Figur 3:: Eine weitere Ausführungsform gemäß der Figur 1 als Stützringverbindung;
- Figur 4:: Eine weitere Auführungsform gemäß der Figur 1 als Konusverbindung;
- Figur 5:: Eine weitere Ausführungsform gemäß der Figur 1 als Gewinde- oder Schnappschlußverbindung;
- Figur 6:: Eine weitere Ausführungsform gemäß der Figur 1 als Dichtringverbindung;
- Figur 7:: Eine weitere Auführungsform gemäß der Figur 1 als Lippendichtverbindung;
- Figur 8:: Eine weitere Auführungsform gemäß der Figur 1 in Seitenansicht mit verripptem Boden;
- Figur 9:: Eine Stirnansicht des Bodens gemäß der Figur 8;
- Figur 10:: Eine weitere Ausführungsform gemäß der Figur 8 als Doppelrippenboden;
- Figur 11:: Eine weitere Ausführungsform gemäß der Figur 10 mit faserverstärkten Rippen.

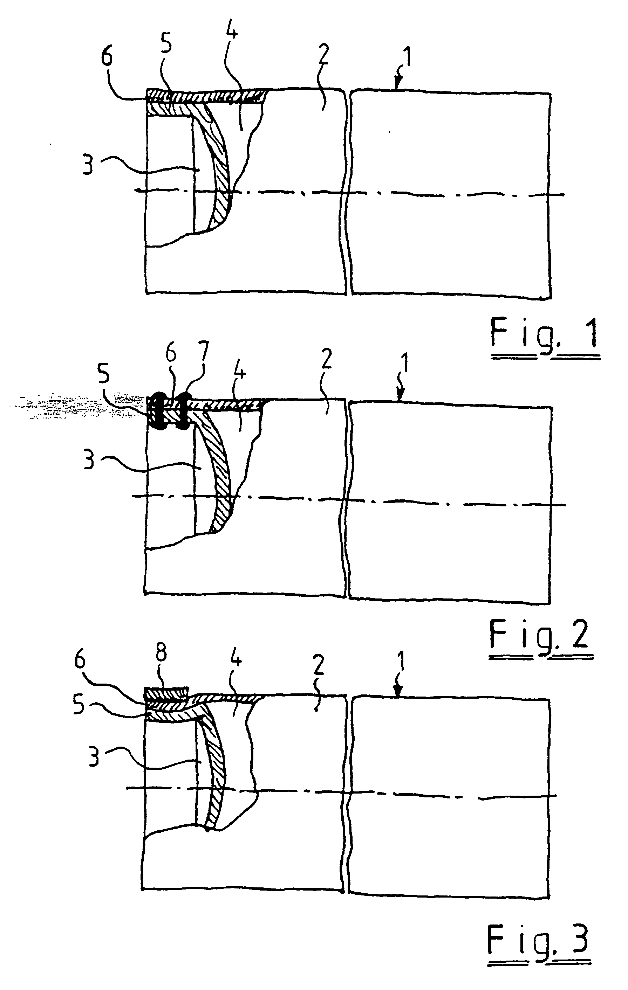

Die Figur 1 zeigt in der seitlichen teilweise geschnittenen Darstellung einen Behälter 1, der dazu bestimmt ist, ein unter Druck stehendes Medium aufzunehmen. Der Behälter 1 selbst besteht dabei aus einem Faser-Kunststoff-Verbund-Material. Seine Form wird im wesentlichen aus einem rohrförmigen Mittelteil 2 gebildet, an dessen Enden jeweils zur Schließung des rohrförmigen Mittelteils 2 ein Boden 3 angeordnet ist. Erfindungsgemäß ist dabei der Boden 3 als separates Teil ausgebildet, wobei er selbst auch aus dem Faser-Kunststoff-Verbund-Material hergestellt ist und das Material aus Kurz-, Lang- oder Endlosfasern besteht. Der Boden 3 ist in seinem Einsatz nach innen in den Behälterraum 4 gewölbt, wobei an dem gewölbten Boden 3 ein umlaufender Kragen 5 angeordnet ist. Dieser Kragen 5 stellt insbesondere den Verbindungsbereich her, der notwendig ist, um einen festen Verbund zwischen der Innenwandung 6 des Mittelteils 2 herzustellen. Der Kragen 5 liegt dabei direkt an der Innenwandung 6 des Mittelteiles 2 an und wird in diesem Bereich mit der Innenwandung 6 des Mittelteils 2 verbunden.

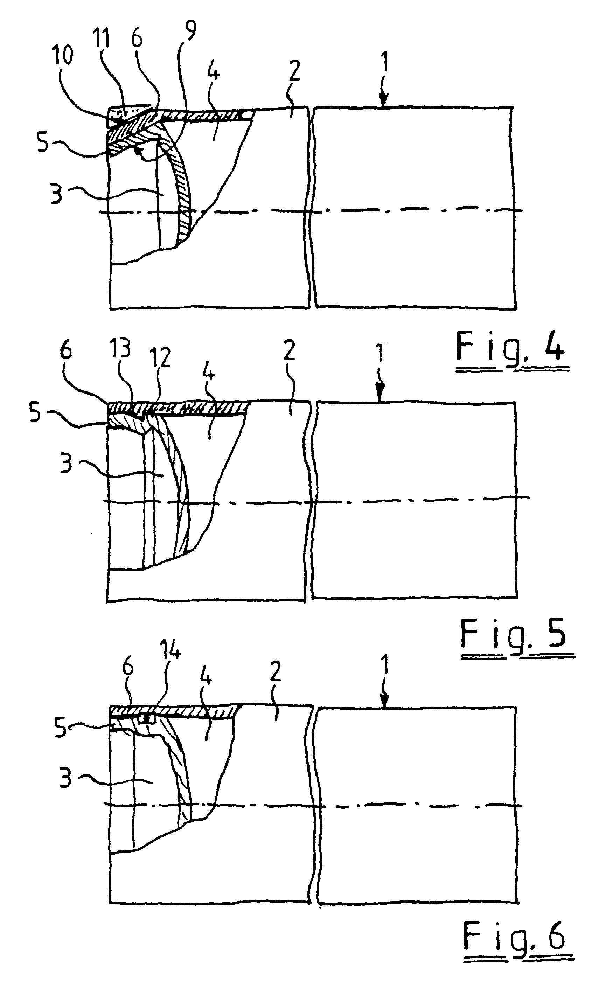

Hinsichtlich der Ausführungsformen, insbesondere den Boden 3 in dem Mittelteil 2 einzubinden, werden gemäß der Figuren 2 - 11 unterschiedliche Möglichkeiten gezeigt, wie eine Stoff- bzw. Formschlußverbindung zwischen der Innenwandung 6 und dem Kragen 5 erfolgen kann. Hierbei zeigt die Figur 2 die Möglichkeit, daß der Kragen 5 mit der Wandung 6 des Mittelteils 2 mittels einer Bolz-, Niet- oder Schraubverbindung 7 verbunden werden kann. Eine andere Art zur Herstellung der Verbindung des Kragens 5 mit der Innenwandung 6 des Mittelteils 2 durch einen Stoffschluß kann auch alternativ hierzu in Form einer Klebung oder auch mittels Schweißung erfolgen. Bei der Herstellung einer Formschlußverbindung, wie sie insbesondere in der Figur 3 dargestellt ist, erfolgt die Anbindung des Kragens 5 mit der Innenwandung 6 des Mittelteils 2 mit einem den Wandungsbereich des Mittelteils 2 einschnürenden Umfangring 8. Bei der Ausführungsform gemäß der Figur 4 erfolgt eine weitere Variante der Formschlußverbindung dadurch, daß zur Formschlußverbindung von Kragen 5 und Wandungsbereich 6 sowohl der Kragen 5 als auch der Wandungsbereich 6 zueinander korrespondierende Konusse 9 und 10 aufweisen, die mittels eines zusätzlichen an der Außenwandung des Mittelteiles 2 angeordneten Umfangringes 11 zusammenpreßbar sind.

Neben einer Formschlußverbindung wird auch vorgeschlagen, daß zur Verbindung von Kragen 5 und Wandungsbereich 6 durch Reibschluß eine Schicht eingebracht ist, die derart beschaffen ist, daß der Reibungskoeffizient zwischen der Schicht und dem Kragen 5 einerseits und Schicht und dem Wandungsbereich 6 andererseits höher ist als der Reibungskoeffizient zwischen Kragen 5 und Wandungsbereich 6 ohne Zusatzschicht.

In Weiterbildung der Verbindungsmöglichkeiten wird nach einer weiteren Ausführungsform vorgeschlagen, insbesondere dargestellt in der Figur 5, daß der Kragen 5 zur herstellenden Verbindung ein Außengewinde 12 aufweist, welches mit einem an der Innenwandung 6 des Wandungsbereichs angeordneten Innengewindes 13 korrespondiert. Auf diese Weise läßt sich der Boden 3 leicht und einfach stirnseitig in das Mittelteil 2 einschrauben, wobei nicht unberücksichtigt bleiben darf. daß aufgrund einer derartigen Verbindung die Möglichkeit besteht, den Behälter leicht zu öffnen, um beispielsweise ihn zu Revisionszwecken zu inspizieren. Ähnliche Vorteile weist ein weiterer Vorschlag einer Verbindung auf, der darin besteht, daß der Kragen 5 mittels einer Schnappverbindung mit der Innenwandung 6 des Mittelteils 2 verbunden ist.

Denkbar sind auch beispielsweise Verbindungen vorzusehen, die auf einer Kombination beruhen, so daß der Kragen 5 mit der Innenwandung 6 mittels einer aus Reib- und Stoffschluß oder einer Kombination aus Form- und Stoffschluß miteinander verbindbar ist.

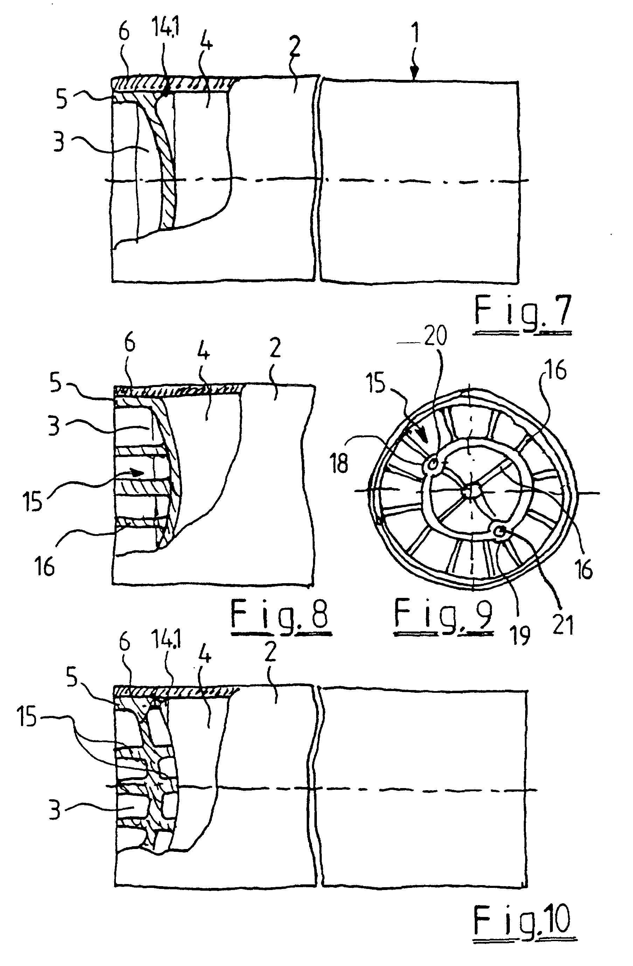

Gemäß einer vorteilhaften Weiterbildung der Erfindung wird vorgesehen, daß zur Abdichtung zwischen dem Kragen 5 und der Innenwandung 6 ein Dichtring 14 angeordnet ist, der aus dem gleichen Thermoplast wie der Behälter 1 besteht. Dies bringt insbesondere den Vorteil, daß bei einer Entsorgung derartiger Behälter 1 eine Sortentrennung nicht vorgenommen werden muß. Dabei kann zur Abdichtung zwischen dem Kragen 5 und der Innenwandung 6 beim Spritzgießen des Bodens 3 eine biegeweiche Dichtlippe 14.1, angedeutet in der Figur 10 und 7, mit eingespritzt werden.

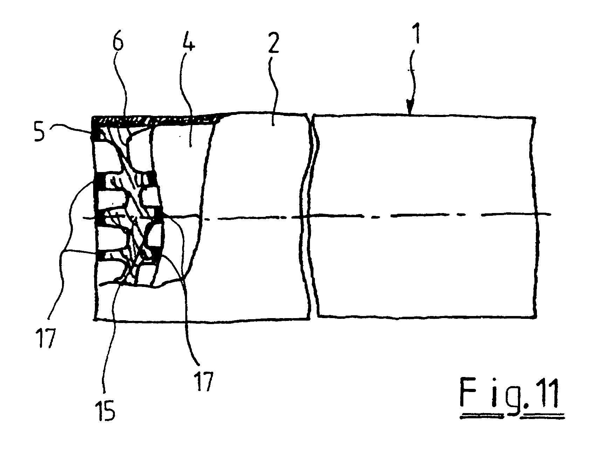

Gemäß einer besonders vorteilhaften Weiterbildung insbesondere des Bodens 3 wird nach der Erfindung vorgeschlagen, daß der gewölbte Boden 3 eine verrippte Struktur 15, dargestellt in der Figur 8 in Seitenansicht und in Stirnansicht in der Figur 9 aufweist. Um eine hohe Biege- und radiale Druckfestigkeit vorwiegend an den Zug- und Druckgurten der Einzelrippen 16 zu erzielen, sind diese durch unidirektionale Faserverbundstränge 17 verstärkt, dargestellt in der Figur 11. Dabei kann - wie insbesondere in der Figur 10 in der Seitansicht zu erkennen ist - die verrippte Struktur 15 auf beiden Seiten der Dichtfläche des Bodens 3 angeordnet sein. In der Figur 9 ist dargestellt. daß in den Knotenpunkten 18 und 19 der Verrippungen 15 Leitungsanschlüsse 20 und 21 eingeformt bzw. angespritzt sind. Nach einer besonders vorteilhaften Weiterbildung, insbesondere der Bodenstruktur, wird nach der Erfindung auch vorgeschlagen, daß der gewölbte Boden 3 auch eine sandwichartige Struktur aufweisen kann, die die entsprechenden Qualtitäts- und Standhaltungsmerkmale für einen derartigen Boden 3 aufweist.

## Patentansprüche

1. Behälter (1) zur Aufnahme eines unter Druck stehenden Mediums, der im wesentlichen aus einem Faser-Kunststoff-Verbund-Material hergestellt ist, wobei dessen Form aus einem rohrförmigen Mittelteil (2) besteht, an dessen Enden zur Schließung des Behälters jeweils ein Boden (3) angeformt ist, wobei der als separates Teil ausgebildete Boden (3) ebenfalls aus einem Faser-Kunststoff-Verbund Material mit Kurz-, Lang- oder Endlosfasern besteht, wobei der Boden (3) gewölbt ausgebildet ist und an dem gewölbten Boden (3) ein umlaufender Kragen (5) angeordnet ist, der an der Innenwandung (6) des Mittelteils (2) anliegt und mit dieser verbunden ist, **dadurch gekennzeichnet. daß** der Boden (3) nach innen in den Behälterraum (4) gewölbt ausgebildet ist.

2. Behälter nach Anspruch 1, **dadurch gekennzeichnet, daß** der Kragen mit der Wandung des Mittelteils mittels einer Bolzen-, Niet- oder Schraubverbindung (7) verbunden ist.

3. Behälter nach Anspruch 1, **dadurch gekennzeichnet, daß** der Kragen (5) mit der Wandung (6) des Mittelteils (2) durch Stoffschluß, in Form einer Klebung oder auch mittels Schweißung verbunden wird.

4. Behälter nach Anspruch 1, **dadurch gekennzeichnet, daß** die Verbindung des Kragens (5) mit der Wandung (6) des Mittelteils (2) durch Formschluß mit einem den Wandungsbereich des Mittelteils (2) einschnürenden Umfangringes (8) erfolgt.

5. Behälter nach Anspruch 1, **dadurch gekennzeichnet, daß** zur Formschlußverbindung von Kragen (5) und Wandungsbereich (6), sowohl der Kragen (5) als auch der Wandungsbereich (6) zueinander korrespondierende Konusse (9 und 10) aufweisen, die mittels eines zusätzlichen an der Aussenwandung des Mittelteils (2) angeordneten Umfangringes (11) zusammenpreßbar sind.

6. Behälter nach Anspruch 1, **dadurch gekennzeichnet, daß** zur Verbindung von Kragen (5) und Wandungsbereich (6) durch Reibschluß eine Schicht eingebracht ist, die derart beschaffen ist, daß der Reibungskoeffizient zwischen der Schicht und dem Kragen (5) einerseits und Schicht und dem Wandungsbereich (6) andererseits höher ist, als der Reibungskoeffizient zwischen Kragen (5) und Wandungsbereich (6) ohne Zusatzschicht.

7. Behälter nach Anspruch 1, **dadurch gekennzeichnet, daß** der Kragen (5) zur herstellenden Verbindung ein Außengewinde (12) aufweist, welches mit einem an der Innenwandung (6) des Wandungsbereichs angeordneten Innengewinde (13) korrespondiert.

8. Behälter nach Anspruch 1, **dadurch gekennzeichnet, daß** der Kragen (5) mittels einer Schnappverbindung mit der Innenwandung (6) des Mittelteils (2) verbunden ist.

9. Behälter nach einem der Ansprüche 1 bis 8, **dadurch gekennzeichnet, daß** der Kragen (5) mit der Innenwandung (6) mittels einer Kombination aus Reib- und Stoffschluß oder einer Kombination aus Form- und Stoffschluß miteinander verbindbar ist.

10. Behälter nach einem oder mehreren der vorhergehenden Ansprüche 1 bis 9, **dadurch gekennzeichnet, daß** zur Abdichtung zwischen dem Kragen (5) und der Innenwandung (6) ein Dichtungsring (14) angeordnet ist, der aus dem gleichen Thermoplast wie der Behälter (1) besteht.

11. Behälter nach Anspruch 10, **dadurch gekennzeichnet, daß** zur Abdichtung zwischen dem Kragen (5) und der Innenwandung (6) beim Spritzgießen des Bodens (3) eine biegeweiche Dichtlippe (14.1) mit angeformt ist.

12. Behälter nach Anspruch 1, **dadurch gekennzeichnet, daß** der gewölbte Boden (3) eine verrippte Struktur (15) aufweist.

13. Behälter nach Anspruch 12, **dadurch gekennzeichnet, daß** zur Erzielung einer hohen Biege- und radialen Druckfestigkeit vorwiegend an den Zug- und Druckgurten der Rippen (16), diese durch unidirektionale Faserverbundstränge (17) verstärkt sind.

14. Behälter nach Anspruch 13, **dadurch gekennzeichnet, daß** sich die Verrippung (15) auf beiden Seiten der Dichtfläche des Bodens (3) befindet.

15. Behälter nach Anspruch 14, **dadurch gekennzeichnet, daß** in den Knotenpunkten (18 und 19) der Verrippungen (15) Leitungsanschlüsse (20 und 21) eingeformt bzw. mit angespritzt sind.

16. Behälter nach Anspruch 1, **dadurch gekennzeichnet, daß** der gewölbte Boden (3) eine sandwichartige Struktur aufweist.

## Claims

1. Container (1) for receiving a pressurised medium, which is substantially manufactured from a fibre plastic composite material, with the form thereof comprising a tubular central section (2), at each end of which a bottom (3) is moulded on for closing the container, with the bottom (3) which is formed as a separate part also comprising a fibre plastic composite material having short fibres, long fibres or filaments, with the bottom (3) having a curved form and a continuous collar (5) being arranged on the curved bottom (3), said collar lying in contact with the inner wall (6) of the central section (2) and being connected thereto, **characterised in that** the bottom (3) is curved inwardly into the container area (4).

2. Container as claimed in Claim 1, **characterised in that** the collar is connected to the wall of the central section by means of a bolted, riveted or screwed connection (7).

3. Container as claimed in Claim 1, **characterised in that** the collar (5) is connected to the wall (6) of the central section (2) by adhesion in the form of gluing or also by means of welding.

4. Container as claimed in Claim 1, **characterised in that** the collar (5) is positively connected to the wall (6) of the central section (2) with a circumferential ring (8) which constricts the wall area of the central section (2).

5. Container as claimed in Claim 1, **characterised in that** in order to positively connect the collar (5) and the wall area (6), both the collar (5) and the wall area (6) have corresponding tapered parts (9 and 10) which can be pressed together by means of an additional circumferential ring (11) which is arranged on the outer wall of the central section (2).

6. Container as claimed in Claim 1, **characterised in that** a layer is introduced in order to connect the collar (5) and the wall area (6) frictionally, said layer being constituted such that the coefficient of friction between the layer and the collar (5), on the one hand, and the layer and the wall area (6), on the other hand, is higher than the coefficient of friction between the collar (5) and the wall area (6) without an additional layer.

7. Container as claimed in Claim 1, **characterised in that** in order to make the connection the collar (5) has an external thread (12) which corresponds to an internal thread (13) arranged on the inner wall (6) of the wall area.

8. Container as claimed in Claim 1, **characterised in that** the collar (5) is connected by means of a snap connection to the inner wall (6) of the central section (2).

9. Container as claimed in any one of Claims 1 to 8, **characterised in that** the collar (5) and the inner wall (6) can be connected to one another by means of a combination of frictional and adhesive connection or a combination of positive and adhesive connection.

10. Container as claimed in one or more of the preceding Claims 1 to 9, **characterised in that** a sealing ring (14) is arranged to provide a seal between the collar (5) and the inner wall (6), which is made from the same thermoplastic as the container (1).

11. Container as claimed in Claim 10, **characterised in that** to provide a seal between the collar (5) and the inner wall (6) a flexurally pliant sealing lip (14.1) is also moulded on during the injection moulding of the bottom (3).

12. Container as claimed in Claim 1, **characterised in that** the curved bottom (3) has a ribbed structure (15).

13. Container as claimed in Claim 12, **characterised in that** in order to achieve a high flexural and radial compression strength, predominantly at the tension and compression webs of the ribs (16), the latter are reinforced by means of unidirectional fibre composite strands (17).

14. Container as claimed in Claim 13, **characterised in that** the ribbing (15) is located on both sides of the sealing surface of the bottom (3).

15. Container as claimed in Claim 14, **characterised in that** line connections (20 and 21) are formed or also injected in the nodes (18 and 19) of the ribs (15).

16. Container as claimed in Claim 1, **characterised in that** the curved bottom (3) has a sandwich-type structure.

## Revendications

1. Récipient (1) destiné à recevoir un fluide sous pression, fabriqué pour l'essentiel en un matériau composite synthétique armé de fibres, la forme du récipient étant constituée d'un élément central tubulaire (2) aux extrémités duquel est conformé, de manière à obturer le récipient, respectivement un fond (3), le fond (3) réalisé sous forme d'un élément séparé étant également fabriqué en un matériau composite synthétique armé de fibres, contenant des fibres courtes, longues, ou continues, le fond (3) étant bombé et une collerette circonférentielle (5) étant aménagée sur le fond bombé (3), collerette qui vient en contact avec la paroi intérieure (6) de l'élément central (2) et qui est reliée à celle-ci,
**caractérisé en ce que** le fond (3) est configuré bombé vers l'intérieur de la chambre (4) du récipient.

2. Récipient selon la revendication 1, **caractérisé en ce que** la collerette est reliée à la paroi de l'élément central par l'intermédiaire d'une liaison boulonnée, rivetée ou vissée (7).

3. Récipient selon la revendication 1, **caractérisé en ce que** la collerette (5) est reliée à la paroi (6) de l'élément central (2) par l'intermédiaire d'une conjugaison de matières, par exemple sous forme d'un collage ou encore au moyen d'une soudure.

4. Récipient selon la revendication 1, **caractérisé en ce que** la liaison entre la collerette (5) et la paroi (6) de l'élément central (2) se fait par conjugaison de formes, à l'aide d'une frette circonférentielle (8) resserrant la zone de paroi de l'élément central (2).

5. Récipient selon la revendication 1, **caractérisé en ce que**, pour réaliser la liaison par conjugaison de formes entre la collerette (5) et la zone de paroi (6), à la fois la collerette (5) et la zone de paroi (6) présentent des cônes complémentaires (9 et 10) qui peuvent être serrés l'un contre l'autre au moyen d'une frette circonférentielle (11) disposée sur la paroi extérieure de l'élément central (2).

6. Récipient selon la revendication 1, **caractérisé en ce que**, pour réaliser la liaison par frottement entre la collerette (5) et la zone de paroi (6), une couche est intercalée, qui présente une constitution telle que le coefficient de frottement entre la couche et la collerette (5) d'un côté, et entre la couche et la zone de paroi (6), de l'autre côté, soit supérieur au coefficient de frottement entre la collerette (5) et la zone de paroi (6). sans cette couche supplémentaire.

7. Récipient selon la revendication 1, **caractérisé en ce que**, pour réaliser la liaison, la collerette (5) comporte un filetage extérieur (12) qui se conjugue avec un filetage intérieur (13) aménagé dans la paroi intérieure (6) de la zone de paroi.

8. Récipient selon la revendication 1, **caractérisé en ce que** la collerette (5) est reliée à la paroi intérieure (6) de l'élément central (2) au moyen d'une liaison à enclenchement.

9. Récipient selon l'une des revendications 1 à 8, **caractérisé en ce que** la collerette (5) peut être reliée à la paroi intérieure (6) via une combinaison de liaisons par frottement et par conjugaison de matières, ou via une combinaison de liaisons par conjugaison de formes et par conjugaison de matières.

10. Récipient selon l'une ou plusieurs des revendications précédentes 1 à 9. **caractérisé en ce que**, pour assurer l'étanchéité entre la collerette (5) et la paroi intérieure (6), une bague d'étanchéité (14) est prévue, qui est constituée de la même matière thermoplastique que le récipient (1).

11. Récipient selon la revendication 10, **caractérisé en ce que**, pour assurer l'étanchéité entre la collerette (5) et la paroi intérieure (6), le fond (3) est conformé, lors du moulage par injection de celui-ci, avec une lèvre d'étanchéité (14.1) souple en flexion.

12. Récipient selon la revendication 1, **caractérisé en ce que** le fond bombé (3) présente une structure nervurée (15).

13. Récipient selon la revendication 12, **caractérisé en ce que**, pour atteindre une résistance élevée à la flexion et à la pression radiale, les nervures (16) sont renforcées au moyen de bandes composites unidirectionnelles (17) de fibres, principalement placées au niveau des nervures sollicitées en traction et en compression.

14. Récipient selon la revendication 13, **caractérisé en ce que** la structure nervurée (15) se trouve des deux côtés de la face d'étanchéité du fond (3).

15. Récipient selon la revendication 14, **caractérisé en ce que** des raccords (20 et 21) de conduites sont conformés dans ou moulés avec les noeuds (18 et 19) des nervures (15).

16. Récipient selon la revendication 1, **caractérisé en ce que** le fond bombé (3) présente une structure de type sandwich.
